# EUROPEAN PATENT APPLICATION

(11) **EP 0 974 783 A1**
(43) Date of publication of application: **26.01.2000**
(21) Application number: 99305680.3
(22) Date of filing: 16.07.1999
(51) Int. Cl.: F16L 37/084

(54) **Retainer for a quick connector**

(30) Priority: 17.07.1998 US 118512
(71) Applicant: PROPRIETARY TECHNOLOGY, INC., Bloomfield Hills, MI 48302-7048 (US)
(72) Inventor: Bartholomew, Donald D., Westminister, South Carolina 29693 (US)
(74) Representative: Price, Nigel John King

(57) **Abstract**

A retainer (10) for a quick connector has a pair of waist segments (76,77,79,81), a shoulder segment, a body segment (72) with an aperture therein, and a leg segment (78). The leg segment (78) is defined by a pair of projecting elements (100) which are at least partially compressible toward one another thereby causing the pair of waist segments (76,77,79,81) to move toward one another. Thus, a swivelable connection is made which has the equivalent length and diameter of a convention non-swivelable threaded coupling. The quick connector may be released by hand or a snap ring tool inserted into holes.

## Description

This invention relates generally to conduit couplings through which fluid flows and specifically to a quick connector which retains a male conduit within a female receptacle.

In the automotive industry, as well as for many other industries, the need always exists for low cost, reliable and easy to assemble components. This need is especially apparent with respect to providing a connection between fluid conveying conduits, such as fuel, brake or refrigerant lines. Traditionally, such a connection is comprised of a male conduit being retained within a female receptacle through use of threaded fittings, flare fittings or through bolted on flanges.

More recently, a variety of snap together quick connect retainers have been used in place of the conventional methods. These quick connectors typically have a plurality of flexible legs which engage an annular bead attached to a male conduit and also engage an undercut groove formed within a female member. Two such examples are disclosed in U.S. Patent 4,601,497 entitled "Swivelable Quick Connector Assembly" which issued on July 22, 1986, and U.S. Patent 4,778,203 entitled "Swivelable Quick Connector for High Temperature Connection" which issued on October 18, 1988, both of which were invented by the inventor of the present invention and are incorporated by reference herewithin. Other quick connectors which were invented by the inventor of the present invention are disclosed in U.S. Patents: 4,524,995 and 4,423,892, both of which are entitled "Swivelable Quick Connector Assembly" and which issued on June 25, 1985 and January 23, 1984, respectively, and are incorporated by reference herewithin.

While the aforementioned quick connectors present significant improvements in the art, each leg member of these devices must typically withstand the pressure of the confined fluid and mechanical pull-out force. Moreover, the legs are radially compressed during installation. Accordingly, in order to enhance the ability to either withstand forces in the longitudinal direction or generate radially directed forces, the part must often be compromised with regard to the other force perpendicular thereto. Therefore, it would be desirable to have a quick connector which can be easily installed and removed, is inexpensive to manufacture and which has separate segments for withstanding longitudinal pull out forces and generating radial retention forces, but which can be much shorter than convention connectors by reducing the length inside the female portion of the connector to the length currently realized with threaded connectors.

In accordance with the present invention, a preferred embodiment of a new and useful quick connector is used to couple a male conduit within a bore of a female receptacle. In general, a quick connector according to the present invention may be of two-piece construction (including a retainer and a body segment) or of three-piece construction (including a retainer sandwiched between front and rear washers). Regardless of the construction, the quick connectors of the present invention share in common being of "quick connect" operation, being disconnectable by hand or by use of a tool, and providing a dynamic seal. The quick connector has one or more waist segments, a shoulder segment, a body segment with an aperture therein (which may be separate in some cases and would consist of an inside washer and an outside washer), and a leg segment. The leg segment is defined by one or more projecting elements which urge the waist segments radially outward for engagement with the female receptacle. The projecting elements are also partially compressible toward one another thereby causing the pair of waist segments to move toward one another for installation and disassembly. The aperture within the body segment engagably surrounds a portion of the male conduit.

The quick connector of the present invention is advantageous over the prior art quick connectors in that the waist segments and shoulder segment are optimized to withstand radially compressive insertion and removal forces while transmitting retention forces in association with the female receptacle. Concurrently, the body segment is optimized to withstand longitudinal pull out forces between the attached male conduit and the adjacent waist segments. In one version this is accomplished as the result of a flange formed on the end of the tube of the male conduit. Furthermore, the present invention quick connector can be easily assembled and disassembled from within the mating female receptacle, thus, providing an inexpensive to assemble system. This is accomplished by at least partially compressing the projecting elements of the leg segment toward one another thereby engaging and disengaging the quick connector from the mating female receptacle. Additionally, the present invention can be inexpensively manufactured. Also, the quick connector is operable with most conventional swivelable male conduits and appropriate female receptacles, so as to convert the rigidly fixed conduit of conventional threaded connectors to a swivelling type connection. These quick connectors of the present invention have separated the springing radial requirement from the requirement to longitudinally abut a wall in the female receptacle. The quick connector of the present invention maintains the male conduit in alignment within the female receptacle thereby providing proper registry and longevity of a seal. The present invention is also beneficial since it allows the male conduit and female receptacle to incorporate longitudinally smaller sealing and retaining areas than those associated with past high-volume couplings which have little pressure drop when connected.

Additional advantages and features of the present invention will become apparent from the following description of embodiments of the present invention given by way of non-limitative example with reference to the accompanying drawings, in which:
FIG. 1 is a perspective view showing a first preferred embodiment of a quick connector of the present invention;
FIG. 2 is a perspective view showing a radial member of the first preferred embodiment of the present invention quick connector of FIG. 1;
FIG. 3 is a perspective view showing a body segment of the first preferred embodiment of the present invention quick connector of FIG. 1;
FIG. 4 is a sectional view, taken along line 4-4 of FIG. 1, showing another embodiment of the first preferred embodiment of the present invention quick connector in relation to a male conduit and a female receptacle;
FIG. 4A is a section view, similar to that of FIG. 4, showing another embodiment of the female receptacle and another embodiment of a male conduit within which the first preferred embodiment of the present invention quick connector of FIG. 1 is employed;
FIG. 5 is a perspective view, opposite from that of FIG. 2, showing a radial member of a second preferred embodiment of the present invention quick connector of FIG. 1;
FIG. 6 is a fragmentary perspective view showing a locking member used in combination with the second preferred embodiment of the present invention quick connector of FIG. 5;
FIG. 7 is a perspective view, showing the locking member of FIG. 6 assembled to the second preferred embodiment of the present invention quick connector of FIG. 5;
FIG. 8 is a sectional view, similar to that of FIG. 4, showing the first preferred embodiment of the present invention quick connector of FIG. 1 used with a further embodiment of the male conduit;
FIG. 9 is a perspective view, similar to that of FIG. 5, showing a third preferred embodiment of the radial member of the present invention quick connector of FIG. 1;
FIG. 10 is a sectional view, similar to that of FIG. 4, showing the first preferred embodiment of the present invention quick connector of FIG. 1 in relation to another embodiment of a male conduit and a female receptacle;
FIG. 11 is a sectional view, similar to that of FIG. 4, showing a dust cover used in combination with the first preferred embodiment of the present invention quick connector of FIG. 1 in relation to yet another embodiment male conduit;
FIG. 12 is a front view of an alternate retainer that may be used with the sealing methods shown herein;
FIG. 13 is an exploded view of a retainer assembly within which the retainer of FIG. 12 is incorporated;
FIG. 14 is a perspective view of a second alternate retainer that may be used with the sealing methods described in the present invention;
FIG. 15 is a sectional view of a connector using the retainer shown in FIGS. 12 and 13, having an inner bushing mounted on the end of the tubing and secured by a small flange; and
FIG. 16 is a section view of the tube of the male conduit detailing a flange arrangement.

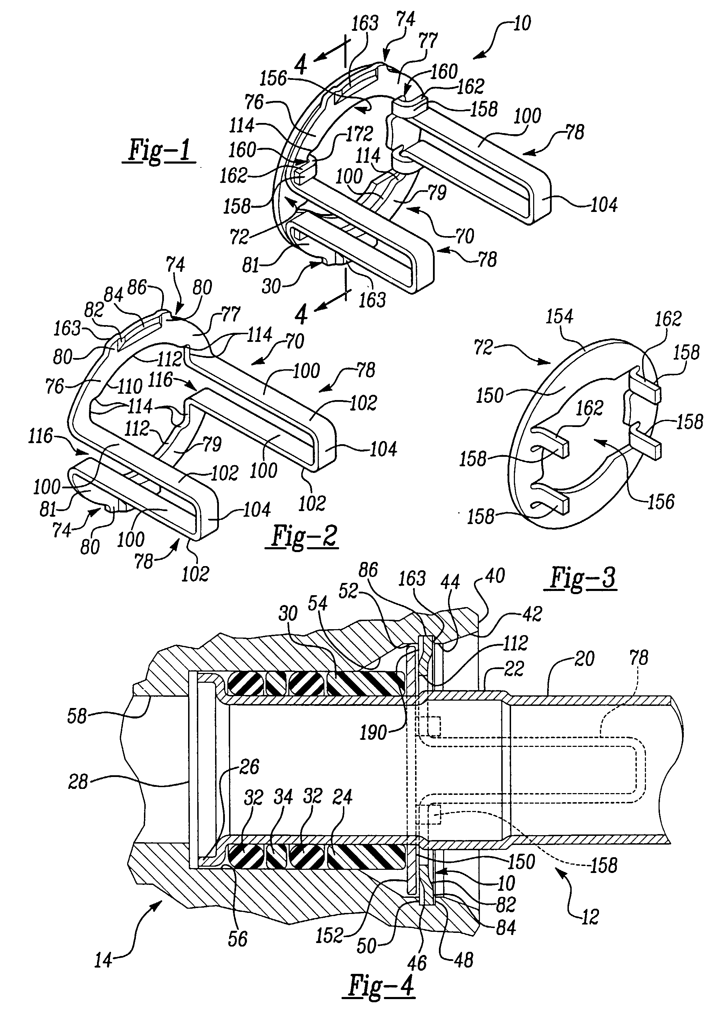

In the automotive industry the need exists for coupling a male tubular member or conduit to a female receptacle. For example, coolant hoses and oil hoses must be connected to a radiator or an engine block. Furthermore, brake hoses often need to be coupled to one another. Referring to FIGS. 1 through 4, a preferred embodiment of a retainer for a quick connector 10 is used to operably retain a swivelable male conduit 12 to a female receptacle 14. A first preferred embodiment of male conduit 12 is a rigid metallic member having a connecting portion 20, a bulged portion 22, a coined reduced diameter portion 24 and a flanged portion 26 proximate with a distal end 28 thereof. Male conduit 12 further has an annular bead or bushing 30 circumferentially attached therearound. A pair of O-ring seals 32 and an annular washer 34 are longitudinally juxtapositioned between bushing 30 and flanged portion 26 so as to circumferentially surround recessed portion 24. In coordination therewith, female receptacle 14 has an outboard face 40, a frusto-conical chamfered lead-in section 42, an annular ridge section 44, a retaining formation or more specifically an undercut groove 46 within which there is an outboard abutting wall 48 and an inboard abutting wall 50, an annular recessed section 52, a frusto-conical median section 54, a bore 56 defined by a cylindrical inside surface, and a passageway 58.

A retainer for a quick connector 10 is defined by a radial member 70 and a body segment 72. As can best be observed in FIGS. 1, 2 and 4, radial member 70 further has a pair of shoulder segments 74, a plurality of waist segments 76, 77, 79 and 81, and a pair of leg segments 78. Each shoulder segment 74 has a pair of flanges 80 from which project three angled side walls 82 joined by a median wall 84, all of which are bordered by a distal edge 86. Moreover, each leg segment 78 has a pair of projecting elements 100 which project perpendicularly from each adjacent waist segment 76, 77, 79 and 81. Each projecting element 100 is connected at a distal end 102 thereof by a truss element 104. Portions 100, 102 and 104 provide compressible outwardly springing action. Waist segments 76, 77, 79 and 81 define an opening 110 which has two partially cylindrical interior edges 112 and four corner areas 114. Each shoulder segment 74, the adjacent pair of waist segments 76 and 77, and the adjacent pair of projecting elements 100 are separated from the symmetrically opposing shoulder segment 74, waist segments 79 and 81, and projecting elements 100, by a pair of gaps 116. Accordingly, projecting elements 100 can be radially compressed toward one another such that shoulder segments 74 are radially translatable toward each other. Leg segments 78 are also configured to urge shoulder segments 74 outward away from one another.

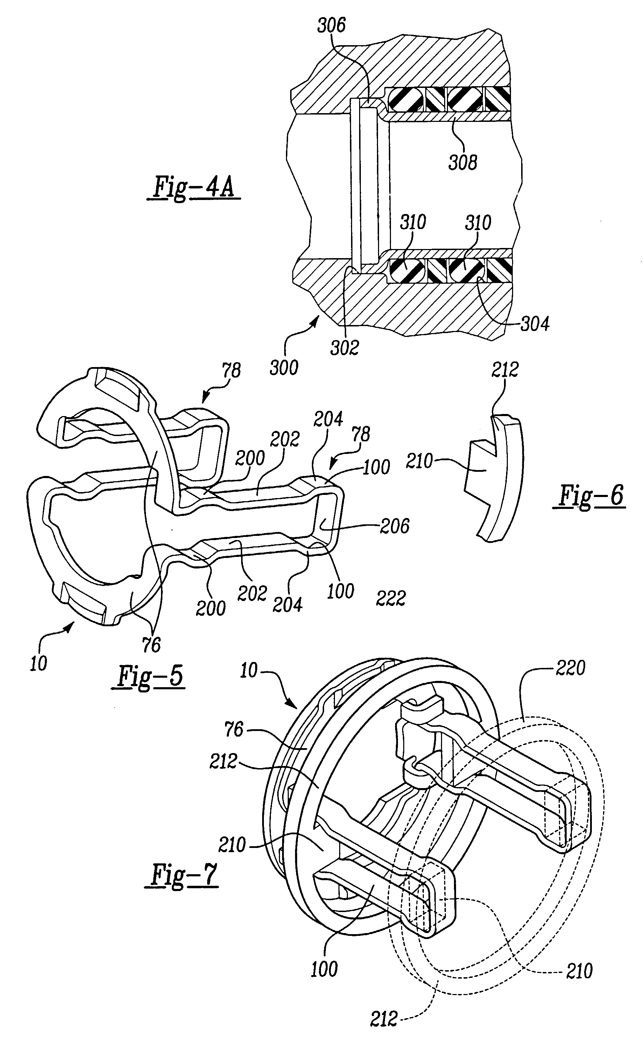

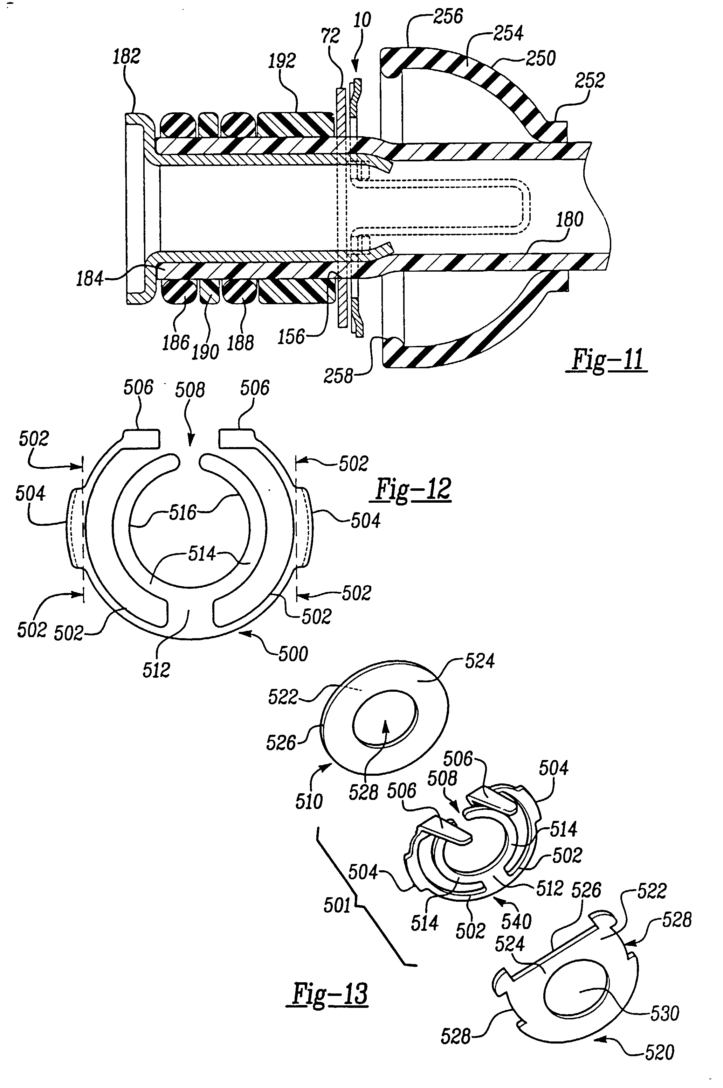

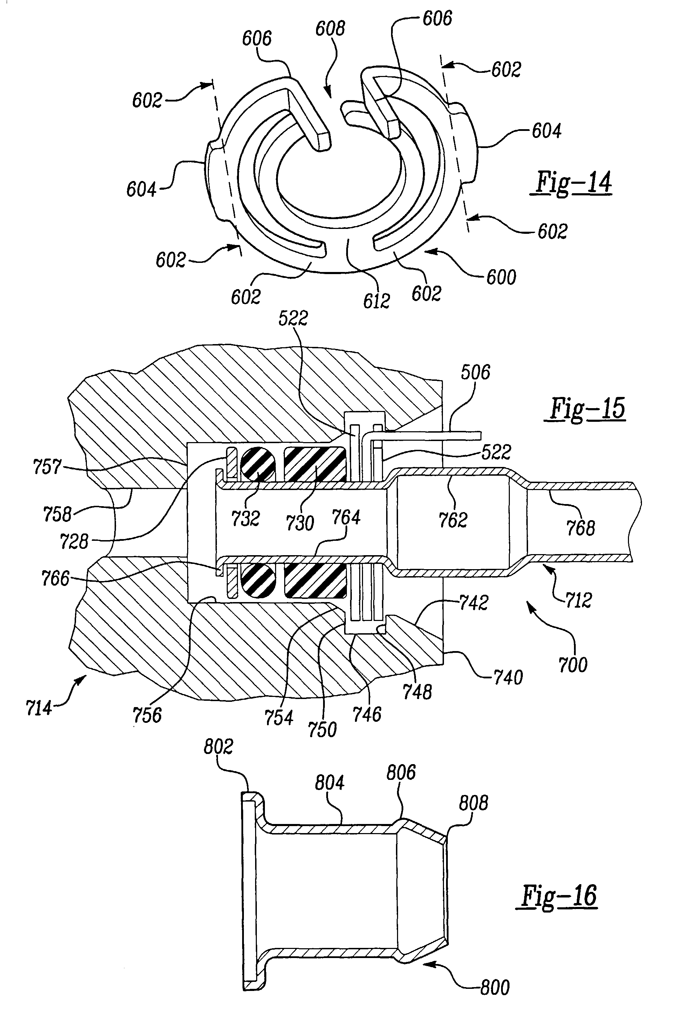

Referring to FIGS. 1, 3 and 4, body segment 72 has a pair of substantially flat faces 150 and 152 bordered by an annular peripheral edge 154 and an internal aperture 156 defined by an inner edge. Four bendable tabs 158 also project from the inner edge surrounding aperture 156. It is noted that the aperture 156 may take on alternate shapes (not shown) for metal tubing and plastic tubing. Plastic tubing (as shown in FIG. 1) may have a liner (illustrated as 182, described below with respect to FIG. 11). This liner that is within the plastic tube may have a slight bulge at the end (shown, for example, as area 806 of FIG. 16). This would result in a tube having a slight bulge in the end travelling past the washer 34, the "O"-ring 32, the outer bushing 30, and the body segment 72 having aperture 156 (shown in FIG. 4). Since the bulge takes the place of the slightly expanded section of the metal tube (shown in FIG. 4 at 22) and prevents separation from the female during installation of the retainer, there must be space for the plastic of the tubing to occupy as the bulged portion of the liner passes thereby. Area 156 of the body 72 may be composed of two partial diameters, about 0.1 mm (.004 in.) different in inside diameter. This larger diameter portion would allow the plastic of the plastic wall of the tubing somewhere to go easily and would also have utility in locking the retainer to the tube for assembly. This may be done when the outer bushing 192 is not reduced in inside diameter to act as the element which prevents the mechanical and pressure separation of the male conduit from the female receptacle. In this latter case the pull-out or separation force would be transferred through the seal(s) (resulting in a better seal) to the front flange (the lower, inner bushing) which maintains the seal(s) on the tubing. When body segment 72 is assembled to radial member 70, face 150 is mounted adjacent to waist segments 76, 77, 79 and 81 opposite from leg segments 78. Tabs 158 of body segment 72 are then aligned with corner areas 114 of radial member 70 and folded over upon a portion of each waist segment 76, 77, 79 and 81 proximate with leg segments 78. Nevertheless, a space 160 is present between an edge 162 of each tab 158 and the abutting wall of corner area 114. This allows waist segments 76, 77, 79 and 81, and shoulder segments 74 to be radially translatable toward one another between tabs 158 and face 150 of body segment 72. Both radial portion 70 and body segment 72 are preferably stamped from a sheet of metallic material such as stainless steel.

Aperture 156 of body segment 72 circumferentially surrounds male conduit 12 and is longitudinally trapped between bulged portion 22 and bushing 30. This is best shown in FIG. 1. Furthermore, peripheral edge 154 of body segment 72 has a smaller diametral dimension than does annular ridge section 44 and annular recessed section 52 of female receptacle 14. Accordingly, body segment 72 serves as a longitudinal and radial retention means between male conduit 12 and radial member 70. During insertion of radial member 70 within female receptacle 14, chamfered section 42 serves to radially compress shoulder segments 74 toward one another. Subsequently, leg segments 78 urge shoulder segments 74 radially outward to engage undercut groove 46. Each shoulder segment 74 has an interface portion 163 which operably engages abutting walls 48 and 50 of female receptacle 14. Thus, radial member 70 is designed to provide radially expansive retention forces to retain body segment 72 to female receptacle 14.

An alternate embodiment of a female receptacle 300 is shown in FIG. 4A. This female receptacle 300 has a slightly constricted diameter bore 302 and a nominal diameter bore 304. In registry therewith, a flanged portion 306 of a male conduit 308 has a diameter corresponding to constricted diameter bore 302. This provides for retention of a pair of O-ring seals 310 prior to installation of male conduit 308 into female receptacle 300. This alternative is a combination of assignee's Series 500 and Series 600 arrangements.

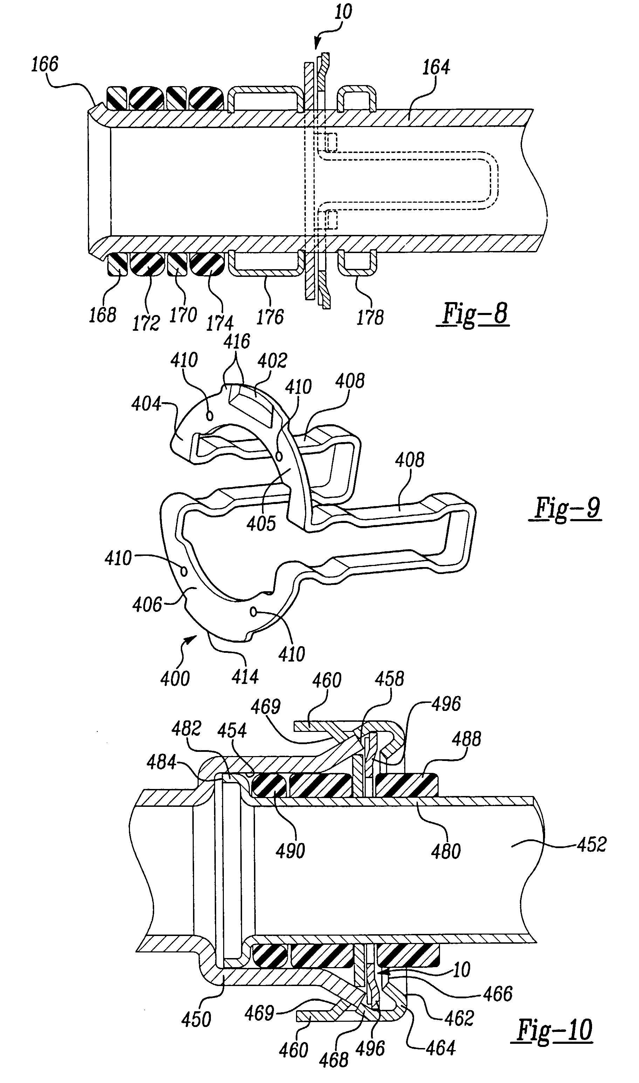

The male conduit assemblies of FIGS. 8 and 11 can alternatively be used in combination with the present invention quick connector 10. In FIG. 8 a male conduit 164 has a flanged distal end 166 against which is located a pair of washers 168 and 170, and a pair of annular elastomeric seals 172 and 174. Furthermore, an outer bushing 176 serves to prevent longitudinal movement of seal 174 and a retainer for a quick connector 10. Longitudinal movement of quick connector 10 may also be prevented by a second bushing 178. Thus, bushings 176 and 178 are secured around male conduit 164 in order to longitudinally trap quick connector 10 therebetween.

Referring to FIG. 11, a polymeric male conduit 180 is illustrated as having a flanged ferrule 182 inserted into a distal end 184 thereof. A pair of elastomeric seals 186 and 188 and a washer 190 are juxtapositioned proximate with distal end 184. Ferrule 182 serves to expand the diameter of male conduit 180 after installation of a retainer for a quick connector 10 thereon so as to cause the inner edge surrounding aperture 156 of the quick connector's body segment 72 to be compressibly attached therewith. A bushing 192 is also compressibly attached around male conduit 180 by employing ferrule 182 to expand conduit 180.

Another preferred embodiment of leg segments 78 of radial member 70 is shown in FIGS. 5 through 7. Each projecting element 100 has a first outwardly offset formation 200, an adjacent inwardly offset formation 202 and a second outwardly offset formation 204 proximate with a truss element 206. This provides a receiving area for a finger 210 of an annular locking member 212. Locking member 212 is first juxtapositioned in position 220 to allow compression of projecting elements 100 during installation. Locking member is then moved to position 222 after installation of a retainer for a quick connection 10 so as to prevent compression of projecting elements 100 and provide a visual indication that the connector is properly assembled. This prevents inadvertent disassembly of quick connector 10 and male conduit 12 (see FIG. 4) from female receptacle 14 (see FIG. 1) and visual assurance that assembly is completed.

The third preferred embodiment of a radial member 400 employed in the retainer for a quick connector 10 (see FIG. 1) of the present invention is illustrated in FIG. 9. Radial member has a single shoulder segment 402, a first waist segment 404, a second waist segment 405, a third waist segment 406 and a pair of leg segments 408. Leg segments 408 serve to radially urge shoulder segment 402 and the opposite waist segment 406 into interlocking engagement with female receptacle 14 (see FIG. 4). A peripheral section 414 of waist segment 406 and a peripheral section 416 of shoulder segment 402 serve as interface portions. A plurality of holes 410 are shown in waist segments 404, 405 and 406 so as to aid in use of an installation or disassembly tool (not shown).

A further embodiment of a female receptacle 450 and a male conduit 452 can be seen in FIG. 10. Female receptacle 450 has a receiving bore 454 and a frusto-conical portion 456 with a distal edge 458 therearound. A collar 460 snugly surrounds lead-in portion 456. Collar 460 has a turned section 462 which defines a lead-in chamfer and a return arm 464 with an abutting edge 466. A localized foot 468 projects radially inward from collar 460 along female receptacle 450. Another foot 469 projects radially inward from the collar 460 to engage the portion 456. The mating male conduit 452 has a nominal section 480 and a flanged portion 482 proximate with a distal end 484 thereof. A pair of bushings 486 and 488 are securely fastened around nominal section 480 of male conduit 452. An O-ring seal 490 is longitudinally trapped between flanged portion 482 and bushing 486. Also, the first preferred embodiment of quick connector 10 of the present invention is longitudinally trapped between bushings 486 and 488 such that an interface portion 496 is operably engaged between abutting edge 466 and distal edge 458 which act as a retaining formation or means.

Referring again to FIG. 11, a dust cover 250 is shown which prevents contaminating particles from entering bore 56 (see FIG. 4) of female receptacle 14 (see FIG. 4) when a retainer for a quick connector 10 and male conduit 180 are inserted therein. Cover 250 is comprised of an annular hub 252 which engagably surrounds male conduit 180. Hub 252 also can be longitudinally slid therealong. A somewhat parabolic-shaped cup 254 projects outward from annular hub 252. Furthermore, a circumferential outer wall 256 projects from an outermost portion of cup 254. Outer wall 256 is open toward distal end 184 of male conduit 180 and has an inwardly turned lip 258 therein. This inwardly turned lip 258 is interlockably engagable with female receptacle 14 (see FIG. 4) so as to prevent contamination from entering therein. Cover 250 is preferably made from an elastomeric material such as thermoplastic rubber.

Referring to FIG. 12, the front view of an alternate quick connect retainer generally illustrated as 500 is shown where the waist segments, the shoulders, and the flanges (elements 80 in FIG. 2) are combined in leg segments 502 and carry engaging lugs 504. Engaging lugs 504 (like element 496 in FIG. 10, or element 163 in FIG. 1, or element 84 in FIG. 2) act to hold the quick connector 500 engaged within the female receptacle. By squeezing release ears 506 together (like 78 and 100 in FIG. 1), sufficient stroke (as element 116 in FIG. 2) so as to disengage the engaging lugs 504 is provided, and release can thereafter be effected. Element 512 is the joining area between the inside partial ring (or complete ring [not shown]) 514. The connection 512 between the ring 514 and the legs 502 is important because it creates a self-centering snap ring (similar to element 158; the bent-over ears of the more fundamental approach shown and discussed previously). Element 516 is the aperture in the combined version shown in FIG. 12. The comments about the sizing of the aperture 156 set forth earlier apply to this combined retainer. The quick connect 500 is used as a retainer with plastic or metal tubing.

FIG. 13 is an exploded view of a retainer assembly, generally illustrated as 501. The retainer assembly 501 consists of an inside washer 510, the retainer 500, and an outer washer 520. The inner washer 510 is in this version a simple washer (as compared with element 72 previously discussed) with two sides 522 and 524, an outside diameter 526, and an aperture 528. The above-made comments about the apertures 156 and 528 being different for plastic and metal tubing is pertinent here as well. Sides 522 and 524 are like sides 150 and 152 and outer surface 526 is similar to surface 154 shown in FIG. 3. With respect to the retainer 500, the release ears 506 are shown in their normal (unstressed) position. The outer washer 520 is the rear washer and it was not needed with the form of retainer shown in FIGS. 1, 2, 3, 5 and 7. The inner washer 510 takes the mechanical and pneumatic forces developed on the rear of bushing 30 in FIG. 4 as a result of locking the outer bushing (element 30 in FIG. 4) to the tube, or passes mechanical forces that would otherwise separate the male conduit from the female receptacle through the "O"-ring(s) (resulting in a tighter seal) due to the capture of the front flange on the male tube. The rear washer 520 passes the forces that would push the retainer 500 back up the male tubing and away from the female receptacle (element 14 in FIG. 4). The rear washer 520 is prevented from sliding backward along the male tube by a bulge put on one end of liner 182 in FIG. 11 or 806 in FIG. 16.

FIG. 14 illustrates an alternate method of arranging a retainer similar to the one shown in FIG. 12. The references used for FIG. 14 are 100 higher than those shown in FIG. 12. An alternate retainer, generally illustrated as 600, has arms 602 that include waist segments, shoulders and legs. A pair of locking lugs 604 correspond to lugs 504 and the shoulder defined by 163 and elements 80, 82, 84, and 86 of FIGS. 1 and 2. A pair of release ears 606 correspond in function to release ears 506 of FIG. 13. Both the illustrated embodiment and the alternate method shown in FIG. 12 are easier to manufacture (they both use the retainer assembly of FIG. 13) and demonstrate lower manufacturing cost than the type shown in FIGS. 1, 2, 3, 4, 4A, 5, 7, 8, 9, 10, and 11. But it should be understood that the arrangements of FIGS. through 16 represent substantially the same idea expressed in different ways. The alternate methods for building the retainer for a quick connector of FIGS. 12 and 14 have one feature that is in addition to the method of arranging the retainer shown in FIGS. 1 through 11. That is, the arrangements of FIGS. 12 and 14 are automatically operating (that is, automatically assembling) snap-ring like devices when used in combination with a female receptacle having a chamfered lead-in (like chamfer 42 of FIG. 4).

With combined reference to FIGS. 15 and 16, FIG. 15 is a cross-sectional view of a single "O"-ring quick connect that uses the self-centering snap-ring of FIGs. 12 and 13, shown generally as 700. (The male conduit could be a plastic tube in which case the insert 800 of FIG. 16 would be pushed in the end of the tube.) The apertures 528 and 530 of washers 510 and 520, respectively, in FIG. 13 would be for plastic tubing as discussed earlier and means (not shown) may be used to assure that the passage of the bulged area 806 (shown in FIG. 16) is accommodated by the plastic of the wall of the tubing. Non-reciprocal pull-out and push-in forces are achieved by the "cold flow" of the plastic of the tubing, flow back, after first making room for the bulged area 806 to pass through washers 510 and 520. The bulged area 806 acts to deform the outer diameter of the plastic tue such that it stops the movement of the outer washer 522 in a manner similar to that of the slightly expanded area 766 of the metal tube 712 with its standard inside diameter 768. The area 764 is an area of reduced diameter and holds a loose outer bushing 730, an "O"-ring 732, and an inner bushing 728, all of which are captured on tube 712 by a flange 766 formed at the distal end of tubing 712.

The female receptacle 714 consists of an outside end 740, a lead-in chamfer 742, an engaging lug abutting wall 748, a diameter 746 sufficient to make possible sufficient locking engagement, and an abutting wall 750 which leads to an "O"-ring lead-in chamfer 754 which itself leads to an "O"-ring/bushing diameter 756, and a wall 757 leading to a through-hole 758. An alternate method may also be employed for making the inner bushing a part of the metal tubing as shown in FIG. 4.

With specific reference to FIG. 16, a bulged end insert for a plastic tube, generally defined as 800, combines the inner bushing at the end opposite the bulge or just has a flange having a reduced outside diameter (not shown). The insert liner 800 is a thin-walled piece that has an inner bushing 802, a stem portion 804, a bulged portion 806, and a smaller end 808.

While the preferred embodiment of a quick connector has been disclosed, it will be appreciated that various modifications may be made without departing from the present invention. The features of the various embodiments may be freely combined together. For example, the body segment and the radial member may be integrated as one part. Furthermore, the peripheral edge of the body segment may have a square shape thereto with tabs being inwardly bent therefrom. Alternatively, the shoulder segments and waist segments may slidably overlap each other rather than having a gap therebetween. Also the sealing means between the male conduit and the female receptacle may be comprised of a single elastomeric O-ring, a pumpable sealant or various other fluid sealing devices as is known within the art. Moreover, a variety of alternative dust cover shapes may be used in combination with a quick connector, a male conduit and female receptacle. While specific material shave have been disclosed in an exemplary fashion, various other materials may of course be employed. It is intended by the following to cover these and other departures from the disclosed embodiments which fall within the scope of the invention as defined in the claims.

## Claims

1. A retainer for a quick connector used to couple a male conduit having a longitudinal axis to a female receptacle, the assembly comprising:
a body segment;
a radial member attached to said body segment;
a pair of waist segments formed on said radial member;
interface portions mounted on said pair of waist segments for engagement with the female receptacle; and
a leg segment attached to said pair of waist segments which extend parallel to the longitudinal axis of the male conduit;
whereby said leg segment is operable to disengage said interface portions from the female member.

2. A retainer assembly for use in a quick connector used to couple a male conduit having a longitudinal axis to a female receptacle, the assembly comprising:
a radial member;
a pair of waist segments formed on said radial member;
interface portions mounted on said pair of waist segments for engagement with the female receptacle; and
a leg segment attached to said pair of waist segments which extend parallel to the longitudinal axis of the male conduit,
whereby said leg segment is operable to disengage said interface portions from the female member.

3. The retainer assembly of claim 2, further including a body segment, said radial member being attached to said body segment.

4. The retainer assembly of any one of the preceding claims, in which the female receptacle has a bore centrally extending therethrough and wherein said leg segment protrudes through said bore of said female receptacle so as to be accessible from thereout.

5. The retainer assembly of any one of the preceding claims, wherein said pair of projecting members of said leg segment are compressible toward one another and wherein said interface portions are insertable into said bore of the female receptacle by allowing said pair of projecting member of said leg segment to at least partially compress toward one another in response to a lead-in chamfer formed on the female receptacle, said leg segment further urging said interface portions radially outward so as to be engagably coupled within the female receptacle, said interface portions being disengagable from the female receptacle by at least partially compressing said projecting members of said leg segment toward one another whereby said quick connector can be longitudinally removed from said receptacle.

6. A retainer assembly quick connector used to couple a male conduit having a longitudinal axis to a female receptacle, the assembly comprising:
a body segment;
a pair of waist segments operatively associated with said body segment;
interface portions mounted on said pair of waist segments for engagement with the female receptacle; and
a leg segment attached to said pair of waist segments which extend parallel to the longitudinal axis of the male conduit,
whereby said leg segment is operable to disengage said interface portions from the female member.

7. The retainer assembly according to claim 6, further including a radial member being operatively associated with said body segment.

8. The retainer assembly according to claim 7, wherein said pair of waist segments are formed on said radial member.

9. The retainer assembly of any one of the preceding claims, wherein said body segment includes an aperture therethrough defined by an inner edge therearound, said inner edge of said body segment surrounding a predetermined portion of the male conduit therewithin.

10. The retainer assembly of claim 9, wherein said leg segment is attached to said pair of waist segments clear of said aperture within said body segment and wherein said leg segment is defined by a pair of projecting elements which extend substantially perpendicular to said pair of waist segments such that said leg segment is orientated substantially parallel with the longitudinal axis of the male conduit.

11. The retainer assembly of any one of the preceding claims, wherein said pair of waist segments has an interior edge thereabout and wherein said body segment is coupled to said pair of waist segments.

12. A retainer assembly for a quick connected used to couple a male conduit having a longitudinal axis to a female receptacle, the assembly comprising:
a bushing disposed around a portion of the male conduit;
a radial member disposed around a portion of the male conduit, said radial member including a pair of waist segments and an area connecting said waist segments, said waist segments having interface portions formed thereon for engagement with the female receptacle, said waist segments being movable toward one another and further including a pair of substantially parallel, operator-manipulable spaced apart members extending therefrom, said spaced apart members being parallel to the longitudinal axis of the male conduit; and
a ring member disposed around a portion of said male member and between said busing and said radial member.

13. A method for removing a male conduit from a female receptacle, the method comprising the steps of:
forming a body segment;
forming a radial member, said radial member being formed to include a pair of waist segments and leg segments having movable projecting elements;
fitting said radial member to said body segment;
forming means for engaging said movable projecting elements of said leg segments;
manipulating said means for removing such that each projecting element is caused to move substantially simultaneously, thereby effecting release of the male conduit from the female receptacle.

14. A method for removing a male conduit from a female receptacle, the method comprising the steps of:
forming a body segment;
forming a radial member, said radial member being formed to include a pair of opposed waist segments, said waist segments defining a first waist segment and a second waist segment, said radial member being further formed to include two leg segments, each of said two leg segments being defined by a first projecting element and a second projecting element, said projecting elements being spaced apart, each of said projecting elements including a proximate end and a distal end, said distal ends being connected with a truss, said proximate ends of both first projecting elements being connected to said first waist segment, and said proximate ends of both second projecting elements being connected to said second waist segment;
fitting said radial member to said body segment;
moving at least one of said first projecting elements and said second projecting elements toward one another through squeezing thereby effecting release of the male conduit from the female receptacle.

15. A method for removing a male conduit having a longitudinal axis from a female receptacle, the method comprising the steps of:
forming a radial member in operative association with the male conduit, said radial member having a waist segment and a pair of spaced-apart leg segments extending from said waist segment, said pair of spaced-apart leg segments being positionable on opposite sides of the male conduit, said waist segment being formed so as to substantially nest with a portion of the male conduit;
substantially simultaneously positioning means for removing on said leg segments; and
substantially simultaneously moving each of said leg segments through manipulation of said means for removing such that said waist segment is moved from a female receptacle-engaging position to a female receptacle-disengaging position whereupon the male conduit may be removed from the female receptacle.

16. The method for removing of Claim 15, including the steps of:
forming each of said leg segments to include a pair of projecting elements;
positioning said means for removing on each projecting element of each of said pairs of projecting elements; and
manipulating said means for removing such that each projecting element of each of said pairs of projecting elements is caused to move substantially simultaneously, thereby effecting release of the male conduit from the female receptacle.

17. The method for removing of Claim 16, including the steps of:
forming each projecting element of each of said pairs of projecting elements to include a proximate end and a distal end;
connecting said distal ends of said pair of projecting elements of one of said leg segments with a first truss;
connecting said distal ends of said pair of projecting elements of the other of said leg segments with a second truss;
spacing apart each projecting element of said pair of projecting elements;
forming said radial member to include a first waist segment and a second waist segment;
connecting said proximate ends of one of said projecting elements of each of said pairs of projecting elements to said first waist segment; and
connecting said proximate end of the other of said projecting elements of each of said pair of projecting elements to said second waist segment.

18. The method for removing of claim 17, including the step of forming a body segment.

19. A method for removing a male conduit having a longitudinal axis from a female receptacle, the method comprising the steps of:
forming a radial member in operative association with the male conduit, said radial member having a first waist segment, a second waist segment, and a leg segment, said leg segment comprising a first projecting element and a second projecting element, each of said projecting elements having a proximate end and a distal end, said radial member further including a truss, said truss including a first end and a second end, said distal end of said first projecting element being connected to said first end of said truss and said distal end of said second projecting element being connected to said second end of said truss, said proximal end of said first projecting element being connected to said first waist segment and said proximate end of said second projecting element being connected to said second waist segment;
positioning means for squeezing on both said first projecting element and said second projecting element;
squeezing said projecting elements substantially toward one another; and
continuing to squeeze said elements while disconnecting the male conduit from the female receptacle.

20. The method for removing of claim 19, wherein said leg segment is a first leg segment, and wherein the method includes the step of forming a second leg segment comprising a first projecting element,a second projecting element, and a truss connecting said projecting elements.

21. The method for removing of claim 20, wherein said means for squeezing includes means for substantially simultaneously squeezing said first and second leg segments.

22. The method for removing of claim 19, 20 or 21, including the step of withdrawing said radial member from the female receptacle while substantially simultaneously withdrawing the male conduit therefrom.
